# EUROPÄISCHE PATENTSCHRIFT

(11) **EP 3 365 385 B1**
(45) Veröffentlichungstag und Bekanntmachung des Hinweises auf die Patenterteilung: **11.12.2019**
(21) Anmeldenummer: 16781716.2
(22) Anmeldetag: 06.10.2016
(51) Int. Cl.: C08J 9/00, C08J 9/30, C04B 26/00, C04B 38/00

(54) **SYSTEM UND VERFAHREN ZUR HERSTELLUNG EINES ORTSCHAUMS**
SYSTEM AND METHOD FOR MAKING AN IN-SITU FOAM
SYSTÈME ET PROCÉDÉ DE FABRICATION D'UNE MOUSSE MOULÉE SUR PLACE

(30) Priorität: 20.10.2015 EP 15190531
(43) Veröffentlichungstag der Anmeldung: 29.08.2018
(73) Patentinhaber: BASF SE, 67056 Ludwigshafen am Rhein (DE)
(72) Erfinder: LONGO-SCHEDEL, Daniela, 53757 Sankt Augustin (DE); HAEHNLE, Hans-Joachim, 67435 Neustadt (DE); VON BENTEN, Rebekka, 67063 Ludwigshafen (DE); REUTER, Frank, 55278 Undenheim (DE)
(74) Vertreter: BASF IP Association
(86) Internationale Anmeldenummer: PCT/EP2016/073917
(87) Internationale Veröffentlichungsnummer: WO 2017/067792

(56) Entgegenhaltungen:
- WO-A1-2014/044604

## Beschreibung

Die vorliegende Erfindung betrifft ein System und Verfahren zur Herstellung eines Ortschaums sowie dessen Verwendung.

Ortschäume auf Basis von Urethanen, härtbaren Aminoplastkondensaten oder Phenolharzen sind seit langem bekannt. Ein Nachteil ist, dass sie brennbar sind und beim Trocknen schwinden. Die DE 25 42 471 beschreibt ein Verfahren zur Herstellung schwundarmer Schaumstoffe aus härtbaren Aminoplastkondensaten in Gegenwart von schwund- und brennbarkeitsmindernden Umsetzungsprodukten aus ortho-Borsäure und mehrwertigen Alkoholen oder Polyalkylenglykolethern mehrwertiger Alkohole.

Die WO 2011/051170 beschreibt ein Verfahren zur Herstellung eines elastischen anorganischen-organischen Hybridschaumstoffes mit guten Wärme- und Schallabsorptionseigenschaften. Der Schaumstoff wird durch Verschäumen einer Mischung aus Gips oder Kaolin, einer wässrigen Polyvinylaminlösung, einer flüchtigen organischen Verbindung als Treibmittel, einem Emulgator und Vernetzer erhalten wird. Aufgrund der verwendeten Treibmittel ist ein bündiges Ausschäumen von Hohlräumen nicht möglich.

Die WO 2009/109537 beschreibt ein Verfahren zur Herstellung eines Schaumstoffes mit hoher Flammfestigkeit und geringer Dichte durch Härtung eines Schlag- oder Treibschaums aus einer wässrigen Zusammensetzung, die Alkalisilikate, Tenside und eine wässrige Polymerdispersion enthält. Die Filmbildung durch Trocknung der Polymerdispersion ist für die Anwendung als Ortschaum zu langsam.

JP-A 11-279318 beschreibt einen flammfesten Sprühschaum auf Basis von Polyurethanen, der durch Vermischen unter Druck einer wässrigen Phosphorsäurelösung und gegebenenfalls anorganischen Füllstoffen mit einer Mischung aus NCO-Gruppen enthaltenden Urethan-Präpolymeren und Calciumcarbonat erhalten wird.

Aus der DE 199 12 988 C1 sind Füllstoff enthaltende Schaumstoffe auf Basis von Polyurethanen und deren Eignung als Wärme- und Isolierstoffe sowie als Brandschutzschäume bekannt.

WO 2008/007187 beschreibt einen Hybridschaumstoff auf Basis von Polyurethanen und anorganischen Füllstoffen mit guten thermischen und akustischen Isolierereigenschaften, Durchlässigkeit und Flammenschutz, sowie gute Haftung auf Beton.

Werden Ortschäume auf Basis von Polyurethanen zur Verfüllung von nahezu geschlossenen Hohlräumen verwendet, kann die Bildung von CO₂ bei der Reaktion der Komponenten zu einem so hohen Druckaufbau in den Hohlräumen führen, dass die Wandungen gesprengt werden.

Die WO 2014/044604 beschreibt ein System zur Herstellung eines Ortschaums, umfassend die Komponenten

| | |
|---|---|
| 50 bis 98 Gew.-% | ein oder mehrere anorganische Füllstoffe A), |
| 1 bis 48 Gew.-% | ein oder mehrere wasserlösliche, kationische Polymere B) |
| 0,5 bis 48 Gew.-% | ein oder mehrere Tenside C) |
| 0,01 bis 5 Gew.-% | ein oder mehrere mit den Polymeren B) reaktionsfähige Vernetzer D) |
| 0 bis 20 Gew.-% | ein oder mehrere Additive E), |

wobei sich die Gewichtsprozente von den Komponenten A) bis E) auf die nichtwässrigen Anteile beziehen und die Summe aus A) bis E) 100 Gew.-% ergeben, sowie ein Verfahren zur Herstellung eines Ortschaums unter Verwendung der Komponenten des Systems und Aufschäumen mit einem Gas oder einer Gasmischung und Verwendung zur Wärmedämmung und Ausfüllen von Hohlräumen und Hohlkörpern. Die Wärmeleitfähigkeit dieses Ortschaumes ist für einige Dämmanwendungen noch zu hoch.

Aufgabe der vorliegenden Erfindung war es, den genannten Nachteilen abzuhelfen und ein System und Verfahren zur Herstellung eines Ortschaums mit niedriger Dichte bereitzustellen, der eine feinzellige, homogene Schaumstruktur und eine verringerte Wärmeleitfähigkeit in trockenem als auch in Feuchte-konditioniertem Zustand aufweist.

Die Aufgabe wurde durch ein System zur Herstellung eines Ortschaums gelöst, welches die Komponenten

| | |
|---|---|
| 50 bis 98 Gew.-%, | bevorzugt 85 bis 95 Gew.-% ein oder mehrere anorganische Füllstoffe A), |
| 1 bis 48 Gew.-%, | bevorzugt 2 bis 10 Gew.-% ein oder mehrere kationische oder amphotere Polymere B) |
| 0,5 bis 48 Gew.-%, | bevorzugt 1 bis 10 Gew.-% ein oder mehrere Tenside C) |
| 0,01 bis 5 Gew.-%, | bevorzugt 0,1 bis 1 Gew.-% ein oder mehrere mit den Polymeren B) reaktionsfähige Vernetzer D) |
| 0,5 bis 10 Gew.-%, | bevorzugt 1 bis 5 Gew.-% ein oder mehrere Zellregulatoren E), ausgewählt aus Silikonen, Silikonaten oder Kohlenstoff, |
| 0 bis 20 Gew.-%, | bevorzugt 1 bis 10 Gew.-% ein oder mehrere Additive F), |

umfasst, wobei sich die Gewichtsprozente von den Komponenten A) bis F) auf Feststoff bzw. den nichtwässrigen Anteil beziehen und die Summe aus A) bis F) 100 Gew.-% ergibt.

### Komponente A)

Als Komponente A) umfasst das System ein oder mehrere anorganische Füllstoffe, insbesondere Mineralien, beispielsweise kolloidale Kieselsäure, Silikate, wie Aluminiumsilikate, insbesondere Kaolin Al₂O₃ * 2SiO₃ * 2 H₂O oder Kaolinit AU[(OH)₈Si₄O₁₀], Sulfate wie Calciumsulfat, insbesondere wasserhaltige Sulfate Ca[SO₄] • n H₂O mit n = 1/2, 2 (Gips), oder Mischungen davon. Besonders bevorzugt werden Calciumsulfat, REA-Gips aus Rauchgasentschwefelungsanlagen, Aluminiumsilikate, insbesondere Kaolin oder Mischungen davon eingesetzt.

Die Komponente A wird vorzugsweise als oberflächenmodifiziertes Mineral eingesetzt, wenn auf geringe Schrumpfung des Ortschaumes bei der Trocknung Wert gelegt wird. Die Oberflächenfunktionalisierung besteht bevorzugt in der Modifizierung durch Amino,- Carboxyl- und/oder Hydroxylgruppen.

Der mittlere Partikeldurchmesser der Komponente A) liegt bevorzugt im Bereich von 0,1 bis 10 µm. Die Rohdichte der Komponenten A) liegt vorzugsweise im Bereich von 2 bis 3 kg/m³ bzw. die Schüttdichte im Bereich von 0,3 bis 2 kg/m³.

### Komponente B)

Als Komponente B) umfasst das System ein oder mehrere kationische oder amphotere Polymere. Bevorzugt sind solche, die primäre oder sekundäre Aminogruppen tragen. Das Polymer B) ist in der Regel wasserlöslich, d.h. die Löslichkeit in Wasser beträgt mindestens 5 Gew.-%, bevorzugt mindestens 8 Gew.-% unter Normalbedingungen (20°C, 101,3 kPa) bei pH 7. Im Falle der amphoteren Polymere liegt eine pH-abhängige Wasserlöslichkeit vor. Je nach Zusammensetzung sind die Polymere in unterschiedlichen pH-Bereichen wasserlöslich. Bevorzugt sind Polymere, die bei einem pH-Wert von größer 6, besonders bevorzugt in einem pH Bereich von 7,5 bis 12 löslich sind. Die Polymeren B) werden in der Regel in Form einer wässrigen Lösung, bevorzugt in einer Konzentration von mindestens 50 g/l, insbesondere mindestens 80 g/l eingesetzt.

Beispiele für kationische Polymere B sind solche, die eine oder mehrere Struktureinheiten, ausgewählt aus Vinylamin, Allylamin, Ethylenimin, Vinylimidazol, N-alkyl aminoethylacrylat, N-alkyl aminoethylmethacrylat, N-alklyamino propylacrylamid, N-alklyamino propylacrylamid enthalten.

Ebenfalls anwendbar sind Polymere, die prim. oder sec. Aminogruppen tragen und die auf nachwachsenden Rohstoffen wie Sacchariden basieren wie z.B. Chitosan.

Geeignet sind insbesondere die in WO 2010/145956 beschrieben Vinylamideinheiten enthaltenden Polymerisate bzw. die durch anschließende teilweise oder vollständige Abspaltung von Formylgruppen aus dem in das Polymerisat einpolymerisierten N-Vinylformamid unter Bildung von Aminogruppen erhältlichen Copolymerisate.

Bevorzugt sind Polymere, die durch vollständige oder partielle Hydrolyse von Polymeren erhalten werden, die durch Polymerisation von mindestens einem Monomeren der Formel 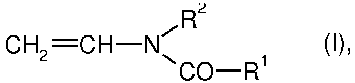 in der R¹, R² = H oder C₁- bis C₆-Alkyl bedeuten, erhältlich sind. Bevorzugte Monomere der Formel (I) sind N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid.

Besonders bevorzugt sind Polyvinylamin oder Poly(vinylamin-vinylformamide)-Copolymere.

Die Ladungsdichten der kationischen oder amphoteren Polymeren B (ohne Gegenionen) liegen in der Regel im Bereich von 1 und 23 meq/g, bevorzugt im Bereich von 2 und 14 meq/g, besonders bevorzugt im Bereich von 3 und 11 meq/g. Die gewichtsmittleren Molekulargewichte liegen üblicherweise im Bereich von 50.000 bis 8.000.000, bevorzugt im Bereich von 100 000 bis 5 000 000, besonders bevorzugt im Bereich von 200.000 bis 3.000.000. Besonders bevorzugt sind Polyinylamine und deren Copolymere die unter der Marke Lupamin® vertrieben werden. Beispiele sind Lupamin®9030, Lupamin®9050, Lupamin®9095.

Bei Verwendung von amphoteren Polymeren B) können Ortsschäume mit besonders niedriger Wärmeleitfähigkeit, insbesondere nach Feuchtekonditionierung, erhalten werden. Geeignete amphotere Polymere sind beispielsweise in WO 2004/087818 und in WO 2005/012637 beschrieben. Bevorzugt werden Copolymere aus den Einheiten Vinylamin und Vinylformamid oder Vinylamin und ungesättigten Carbonsäuren/Carbonsäuresalzen und Terpolymere aus den Einheiten Vinylamin, Vinylformamid und ungesättigten Carbonsäuren /Carbonsäuresalzen. Besonders bevorzugt werden Copolymere aus Vinylamin und Natriumacrylat und Terpolymere aus Vinylamin, Vinylformamid und Natriumacrylat. Beispielhaft genannt werden kann z.B. XELOREX® F 3000.

### Komponente C)

Als Komponente C) umfasst das System ein oder mehrere Tenside, die zur Bildung und Stabilisierung des Schaums eingesetzt werden. Als Tenside können anionische, kationische, nichtionische oder amphotere Tenside verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Tenside kommen Alkyltriammoniumsalze, Alkylbenzyldimethylammoniumsalze und Alkylpyridiniumsalze zum Einsatz.

Besonders bevorzugt werden Mischungen aus anionischen und nichtionischen Tensiden eingesetzt.

Zur Erzielung geringerer Dichten werden bevorzugt Tenside auf Basis natürlicher Eiweisrohstoffe, besonders bevorzugt alkoholbeständige Proteinschaummittel eingesetzt. Derartige Tensid-Mischungen sind beispielsweise kommerziell als Produkte des Schaumgeist®-Portfolios von Dr. Sthamer, Hamburg erhältlich.

### Komponente D)

Als Komponente D) umfasst das System einen oder mehrere Vernetzer D), die mit der Komponente B) reagieren können. Bevorzugt werden als Vernetzer mindestens bifunktionelle Verbindungen eingesetzt, die als funktionelle Gruppen Aldehyde, Ketone, Isocyanate, Epoxide, Acrylate, Acrylamide, Ester oder Vinylsulfonate aufweisen. Bevorzugt sind zwei- oder mehrfunktionelle Aldehyde, besonders bevorzugt ist Ethandial.

### Komponente E)

Als Komponente E) enthält das System ein oder mehrere Zellregulatoren. Die Zellregulatoren sorgen für eine homogenen und feinzellige Zellstruktur und eine geringere Wärmeleitfähigkeit des Ortschaums in getrocknetem Zustand. Als Zellregulatoren eigenen sich beispielsweise Silikone oder Silikonate, wie sie zum Beispiel als Produkte der Tegostab®-Reihe der Firma Evonik Indunstries oder Silikonate, wie sie beispielsweise als Produkte der SilRes®-Reihe der Firma Wacker Chemie angeboten werden, wobei bevorzugt Alkylsilikonate eingesetzt werden.

Als Komponente E) eigenen sich auch Kohlenstoff, insbesondere in der Modifikation als Graphit. Kohlenstoff wirkt als Zellregulator in dem System zur Herstellung eines Ortschaums und wird erfindungsgemäß nicht als anorganischer Füllstoff (Komponente A) eingesetzt. Bevorzugt wird Graphit mit einer mittleren Partikelgröße von 1-50 µm, insbesondere von 2,5-12 µm. Das Schüttgewicht liegt bevorzugt im Bereich von100-500 g/l. Die spezifische Oberfläche liegt bevorzugt im Bereich von 5-20 m²/g. Es kann beispielweise Naturgraphit oder gemahlener synthetischer Graphit eingesetzt werden.

### Komponente F)

Als Komponente F) kann das System ein oder mehrere, von den Komponenten A) bis E) verschiedene Additive umfassen. Als Additive kommen insbesondere Verbindungen in Frage, die den Schrumpf oder die Wasseraufnahme verringern verarbeitungstechnische Vorteile bringen.

Zur Verringerung des Schrumpf können beispielsweise Dimethyldihydrophyethylharnstoff oder Zuckerderivate wie beispielsweise Sorbitol eingesetzt werden.

Die Wasseraufnahme kann beispielsweise durch selbstvernetzende Styrol-Acrylat-Dispersionen verringert werden.

Zur besseren Verschäumbarkeit können viskositätsbeeinflussende Additive, z.B. Stärke, modifizierte Zellulosen, Guarkernmehl, Polyvinylalkohol oder funktionalisierte Alkyldi- oder Alkyltrioxysilane, wie beispielsweise 3-Aminopropyltriethoxysilan zugesetzt werden.

Das System enthält keine leichtflüchtigen organischen Treibmittel, wie niedrigsiedende C₄-C₈-Kohlenwasserstoffe, Alkohol, Ether, Ketone und Ester.

Für einen guten Brandschutz sollte der Anteil an organischen Bestandteilen in dem Ortschaum möglichst gering sein. Bevorzugt wird ein System eingesetzt, bei dem der Anteil an organischen Bestandteilen so gering ist, dass die Ortschäume den Brandtest B1 nach DIN 4102 bestehen und einen Feuerwiderstand F30 bei einer Dicke von 50mm und F60 bei einer Dicke von 100mm aufweisen. Die Summe der Feststoffe (nichtwässrigen Anteile) der Komponenten B), C), D) E) und F) liegt daher bevorzugt im Bereich von 2 bis 20 Gew.-%, besonders bevorzugt im Bereich von 5 bis 15 Gew.-%, bezogen auf den Ortschaum.

Gegenstand der Erfindung ist auch ein Verfahren zur Herstellung eines Ortschaums unter Verwendung der oben beschriebenen Komponenten A) bis F) des Systems und Aufschäumen mit einem Gas oder einer Gasmischung.

Der Ortschaum kann durch Vermischen und Aufschäumen einer wässrigen Zusammensetzung aus den Komponenten A) bis F) mit einem Gas oder einer Gasmischung unter Druck und Einwirkung mechanischer Kräfte, wie Rühren oder Scherung mittels statischen Mischern erhalten werden. Es ist auch möglich, die wässrige Zusammensetzung durch das Dispergieren eines inerten Gases in Form von feinen Gasblasen aufzuschäumen. Das Eintragen von Gasblasen in die wässrige Zusammensetzung kann mit Hilfe von Schlag-, Schüttel-, Rühr-, Peitsch-Stator- oder Rotorvorrichtungen erfolgen. Bevorzugt werden Mischer mit Stator- und/oder Rotor-elementen eingesetzt.

Als Gas oder Gasmischung werden vorzugsweise inerte Gase, wie Stickstoff, Argon, Kohlenstoffdioxid oder Sauerstoff eingesetzt. Besonders bevorzugt wird Luft verwendet.

### Bevorzugt umfasst das Verfahren die Stufen

(a) Eintragen eines Gases oder einer Gasmischung in eine wässrigen Lösung oder Suspension, die mindestens die Komponente C) enthält,
(b) Aufschäumen der wässrigen Lösung oder Suspension über ein oder mehrere Mischelemente
(c) Zugabe der Komponenten A), B), D), E) und F) zusammen oder getrennt vor oder nach Stufe (b) über ein oder mehrere Mischelemente,
(d) Trocknung auf einen Wassergehalt unter 5 Gew-%.

In Stufe (a) wird vorzugsweise Druckluft mit einem Druck im Bereich von 10 bis 3000 kPa, bevorzugt im Bereich von 100 bis 2000 kPa eingetragen.

Das Einmischen der Komponenten A) bis F) kann zusammen oder getrennt über ein oder mehrere Mischelement erfolgen. Bevorzugt werden die Komponenten B) und D) des Systems bzw. die diese Komponenten enthaltenden Vormischungen separat gelagert und erst vor Ort zur Herstellung des Ortschaums vermischt. Vorzugsweise erfolgt die Eintragung über verschiedene Dosierstellen der Vorrichtung.

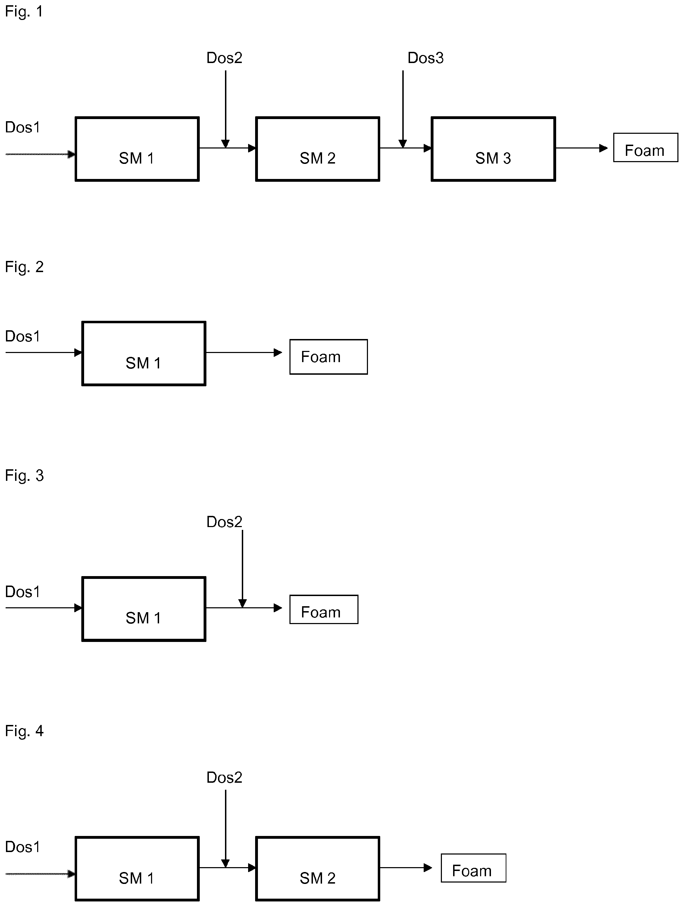

Der Ortschaum kann in handelsüblichen Schäumvorrichtungen für Ortschäume hergestellt werden. Geeignete Vorrichtungen zur Herstellung des Ortschaums (Foam) sind in den Abbildungen Fig.1 - 4 schematisch dargestellt.

Die Vorrichtung gemäß Fig. 1 besteht aus drei statischen Mischern (SM 1, SM 2 und SM 3) mit drei Dosiereinrichtungen (Dos1, Dos2 und Dos3). Vorzugweise werden die Komponenten C) und D) ggf. E) und das Gas oder der Gasmischung über die Dosiereinrichtung (Dos1), die Komponenten A), B) und E) gemeinsam über die Dosiereinrichtung (Dos2) und die Komponente F) über die Dosiereinrichtung (Dos3) zugegeben.

Die Vorrichtung gemäß Fig. 2 besteht aus nur einem statischen Mischer (SM 1) mit der Dosiereinrichtungen (Dos1) für die Zugabe der wässrigen Zusammensetzung aus Komponenten A) bis F). Die Vorrichtung gemäß Fig. 3 entspricht der Vorrichtung gemäß Fig. 2 mit einer zusätzlichen Dosiereinrichtung (Dos2). Hier können Die Komponenten A) bis E) gemeinsam über die Dosiereinrichtung Dos1 und getrennt davon die Komponente F) über die Dosiereinrichtung Dos2 zugegeben werden.

Die Vorrichtung gemäß Fig. 4 ist eine vereinfachte Form der Vorrichtung gemäß Fig. 1. Sie besteht aus zwei statischen Mischern (SM 1 und SM 2) mit zwei Dosiereinrichtungen (Dos1 und Dos2). Vorzugweise werden die Komponenten C), D), und ggf. eine oder mehrere Komponenten E) und das Gas oder der Gasmischung über die Dosiereinrichtung (Dos1), die Komponenten A), B) und F) und ggf. eine oder mehrerer weitere Komponenten E) gemeinsam über die Dosiereinrichtung (Dos2) zugegeben.

In der Regel werden die Komponenten B) - D) in Form wässriger Lösungen eingesetzt. Zur Anpassung der Viskosität können einzelnen Komponenten oder Mischungen der Komponenten weiteres Wasser zugesetzt werden. Bevorzugt weist die wässrige Suspension im letzten Mischelement einen Feststoffgehalt im Bereich von 5 bis 50 Gew.-%, besonders bevorzugt von 10 bis 30 Gew.-% auf.

Gegenstand der Erfindung ist auch ein Ortschaum, der nach dem erfindungsgemäßen Verfahren erhältlich ist. Je nach eingesetzter Verschäumungsapparatur, Anzahl der Mischelemente und Einstellung des Drucks kann die Dichte in weiten Bereichen eingestellt werden. Vorzugsweise weist der Ortschaum eine Dichte im Bereich von 10 bis 300 kg/m³, besonders bevorzugt im Bereich von 20 bis 50 kg/m³ auf. Die Wärmeleitfähigkeit λ des getrockneten Ortschaum, ermittelt nach DIN EN 12667 (Mai 2001), liegt bevorzugt unter 36 mW/K*m, besonders bevorzugt im Bereich von 30 bis 35 mW/K*m. Die Wärmeleitfähigkeit λ, feucht nach Lagerung in einer Klimakammer bei 80% Feuchtigkeit und 23°C bis zur Gewichtskonstanz liegt bevorzugt im Bereich von 32 bis 41 mW/K*m. Der Ortschaum weist bevorzugt einen Brennwert, bestimmt nach DIN 51900 Teil 3, von kleiner als 3,0 MJ/kg auf.

Der Ortschaum eignet sich zur Wärmedämmung und zum Ausfüllen von Hohlräumen und Hohlkörpern, insbesondere zum Dämmen von Hohlräumen in Bauwerken, beispielsweise durch Füllen von zweischaligen Mauerwerken. Des Weiteren eignet sich der Ortsschaum zur Innendämmung von Bauwerken, besonders von Wänden, Decken, Kriechkellerdecken und Dächern, zum Ausschäumen von Hohlblocksteinen zur Verbesserung der Dämmleistung, zum Dämmen von Rohrleitungen und Technikkomponenten, zum brandsicheren Verschluss von Mauerdurchbrüchen für beispielsweise Leitungsdurchführungen, sowie zum Ausfüllen von brandsicheren Sektionaltoren, Türen und Fensterprofilen. Der Ortschaum eignet sich auch als Brandriegel oder Teil eines Brandriegels in Gebäuden oder zum Ausfüllen von Hohlräumen und Hohlkörpern.

Der Ortsschaum kann für diese und andere Anwendungen sowohl allein als auch in Kombination mit einem oder mehreren anderen Dämmmaterialien in Form von Platten oder Flocken eingesetzt werden. Geeignete Dämmmaterialien sind geschäumte Kunststoffe, wie Partikelschaumstoffe aus weißem oder grauem, expandierbarem Polystyrol (EPS, Styropor®, Neopor®) oder Styrolextrusionsschaumstoffe (XPS, Styrodur®) oder Polyurethanschaumstoffe (PUR), geschäumte Elastomere auf Basis von Neopren-kautschuk oder EPDM, anorganische Dämmstoffe, wie Mineralfasern, Steinwolle, Glaswolle, Glasschaumgranulate, Schaumglas, Blähperlite oder Silikatschaumstoffe, Naturdämmstoffe wie, Schafwolle, Flachs, Holzweichfaserplatten, Holzwolleleichtbauplatten, Kork, Kokosmatten oder Zellulose. Bevorzugt kann der erfindungsgemäße Ortschaum zusammen mit Mineralwolle eingesetzt werden.

### Beispiele

**Einsatzstoffe:**

| | |
|---|---|
| Komponente A1 | Translink® 445 (Oberflächenmodifizierter Kaolin mit einer mittleren Partikelgröße 1,4 µm) |
| Komponente A2 | REA-Gips (aus einer Rauchgas-Entschwefelungs-Anlage), CaSO₄.2H₂O. Calcium sulfate dihydrate |
| Komponente A3 | Ansilex® 93 (calcinierter Kaolin, nicht oberflächenbehandelt, mittlere Partikelgröße 0,9 µm) |
| Komponente B1 | Lupamin® 4570 (Copolymer aus Vinylamin, Vinylformamid (7:3 molar) mit einem mittleren Molekulargewicht, Festgehalt 31%) |
| Komponente B2 | Xelorex® F3000 (Terpolymer aus Vinylamin, Vinylformamid und Natriumacrylat (35:35:30 molar), amphoter, mit einem hohen Molekulargewicht, Feststoffgehalt 10 - 12 Gew.-%) |
| Komponente B3 | Lupamin® 9050 (Copolymer aus Vinylformamide und Vinylamin (1:1 molar) mit hohem Molekulargewicht; Festgehalt 16.5%,) |
| Komponente C1 | Schaumgeist®-Omega % (alkoholbeständiges Proteinschaummittel auf Basis natürlicher Eiweisrohstoffe, Schaumstabilisatoren und Frostschutzmittel, Dr. Sthamer, Hamburg) |
| Komponente C2 | Tensidmischung aus anionischem und nichtionischem Tensid: Disponil FES 32 (Natriumlaurylpolyethersulfat) und Lutensol AT80 (Fettsäureethoxylat) im Gewichtsverhältnis 1:3; |
| Komponente C3 | Schaumgeist® 6% (Proteinschaummittel auf Basis natürlicher Eiweisrohstoffe, Schaumstabilisatoren und Frostschutzmittel, Dr. Sthamer, Hamburg) |
| Komponente D1 | Glyoxal (Ethandial, Oxalaldehyd) |
| Komponente E1 | wässrige Lösung von Kaliummethylsiliconat |
| Komponente E2 | Graphit UF995 |
| Komponente F1 | 3-Aminopropyltriethoxysilan |

### Messmethoden:

Die Dichte der Schaumprobe wurde bestimmt durch Wiegen und Messen von Länge, Breite und Höhe.

Der Brennwert wurde laut Norm DIN 51900 Teil 3 bestimmt.

Für die Bestimmung der Wasseraufnahme (Gew.-%) wurden die Schaumproben in einer Klimakammer bei 80% Feuchtigkeit und 23°C bis zur Gewichtskonstanz gelagert.

Die Schnittfestigkeit nach der Aufschäumung wurde mit einem Messer und einem Chronometer bestimmt. Eine Probe gilt als schnittfest, wenn ein Stück der Probe mit dem Messer abgetrennt und abgehoben werden kann, ohne dass dieses Stück die Form verliert.

Für die Bestimmung des Schrumpfens und wurden die Schaumproben in einer Klimakammer bei 80% Feuchtigkeit und 23°C bis zur Gewichtskonstanz gelagert und die Dimensionsänderungen gemessen.

Die Wärmeleitfähigkeit λ wurde durch Messung des Wärmestromes im Einplattengerät nach DIN EN 12667 (Mai 2001) ermittelt. Die Wärmeleitfähigkeit λ, feucht wurde nach Lagerung in einer Klimakammer bei 80% Feuchtigkeit und 23°C bis zur Gewichtskonstanz ermittelt

### Beispiele 1 - 7

Für die Beispiele 1 - 7 wurde in einem Aufbau gemäß Fig. 4 mit zwei statischen Mischelementen (SM 1, SM 2) mit Durchmessern zwischen 20 und 50 mm eine wässrige Lösung der Komponenten C) und D) und E1 mit Druckluft (500 kPa) im ersten Mischelement SM 1 verschäumt. Über die Dosierstelle Dos2 wurde anschließend eine Mischung der Komponenten A), B) und F) und im Falle von Beispiel 7 E2 und gegebenenfalls zusätzlichem Wasser zur Einstellung des Feststoffgehaltes der Suspension zugemischt und dem zweiten Mischelement SM2 zugeführt. Durch die Beaufschlagung des Aufbaus mit Druckluft vor dem ersten Mischelement wird der Schaum durch die weiteren Mischelemente zur Austrittdüse gefördert. Die Trocknung erfolgte an Luft bei 20°C.

### Vergleichsversuche V1 und V2

In einem Aufbau gemäß Fig. 1 mit drei statischen Mischelementen (SM 1, SM 2 und SM 3) mit Durchmessern zwischen 5 und 10 mm wurde eine wässrige Lösung der Komponente C mit Druckluft (2000 kPa) im ersten Mischelement SM 1 verschäumt. Über das zweite Mischelement SM 2 wurde anschließend eine Mischung der Komponenten A2, A3, B3 und ggf. F1 und gegebenenfalls zusätzlichem Wasser zur Einstellung des Feststoffgehaltes der Suspension zugemischt. Zuletzt wurde im dritten Mischelement SM 3 die Komponente D1 zudosiert und homogenisiert. Durch die Beaufschlagung des Aufbaus mit Druckluft vor dem ersten Mischelement wird der Schaum durch die weiteren Mischelemente zur Austrittdüse gefördert. Die Trocknung erfolgte an Luft bei 20°C.

### Vergleichsversuch V3

Der Vergleichsversuch V3 wurde gemäß der Beispiele 1-7 gemäß Fig. 4 hergestellt
In Tabelle 1 sind die Komponenten A bis F zur Herstellung der Ortschäume, jeweils bezogen auf den nichtwässrigen Anteil, in Gewichtsprozent zusammengestellt. Der Feststoffgehalt (nichtwässrige Anteil) in Gewichtsprozent bezieht sich auf die Mischung aller Komponenten nach der letzten Dosierstelle.

In Tabelle 2 sind die Eigenschaften der getrockneten Ortschäume zusammengestellt. Die Wärmeleitfähigkeit λ, feucht wurde nach Lagerung in einer Klimakammer bei 80% Feuchtigkeit und 23°C bis zur Gewichtskonstanz ermittelt.

**Tabelle 1 Einsatzstoffe für die Ortschäume Beispiele B1 bis B7 und Vergleichsversuche V1 bis V3 in Gewichtsprozent, bezogen auf den nichtwässrigen Anteil der Komponenten**

| Komponente | Einheit | B1 | B2 | B3 | B4 | B5 | B6 | B7 | V1 | V2 | V3 |
|---|---|---|---|---|---|---|---|---|---|---|---|
| A1 | [Gew.-%] | 86,5 | 86,3 | 86,0 | 84,5 | 84,8 | 84,6 | 82,2 | | | 87,6 |
| A2 | [Gew.-%] | | | | | | | | 62,2 | 62,4 | |
| A3 | [Gew.-%] | | | | | | | | 31,0 | 31,1 | |
| B1 | [Gew.-%] | 8,7 | 8,6 | 8,6 | | | | | | | 10,2 |
| B2 | [Gew.-%] | | | | 8,5 | 8,5 | 8,5 | 8,2 | | | |
| B3 | [Gew.-%] | | | | | | | | 5,0 | 5,0 | |
| C1 | [Gew.-%] | 2,3 | 2,4 | 2,6 | 3,5 | 3,3 | 3,3 | 3,6 | | | 1,2 |
| C2 | [Gew.-%] | | | | | | | | 1,4 | 1,4 | |
| D1 | [Gew.-%] | 0,3 | 0,3 | 0,3 | 0,4 | 0,4 | 0,4 | 0,4 | 0,2 | 0,2 | 0,14 |
| E1 | [Gew.-%] | 1,5 | 1,5 | 1,7 | 2,3 | 2,2 | 2,3 | 2,4 | | | |
| E2 | [Gew.-%] | | | | | | | 2,5 | | | |
| F1 | [Gew.-%] | 0,9 | 0,9 | 0,9 | 0,8 | 0,8 | 0,8 | 0,8 | | 0,3 | 0,9 |

**Tabelle 2 Eigenschaften der getrockneten Ortschäume der Vergleichsversuche V1 bis V3 und der Beispiele B1 bis B7**

| Eigenschaft | Einheit | B1 | B2 | B3 | B4 | B5 | B6 | B7 | V1 | V2 | V3 |
|---|---|---|---|---|---|---|---|---|---|---|---|
| Dichte | [kg/m³] | 47 | 38,3 | 41,3 | 25,5 | 26,7 | 36,2 | 27,3 | 50,7 | 26,9 | 46,1 |
| Wärmeleitf. λ, (trocken) | [mW/m*K] | 33,3 | 33,2 | 33,6 | 33,1 | 33,5 | 33,8 | 31,9 | 40 | 36 | 38,7 |
| Wärmeleitf. λ, (feucht) | [mW/m*K] | 40,6 | 38,9 | | 35,2 | 37,2 | 37,4 | 36,1 | | | 42,1 |

## Patentansprüche

1. System zur Herstellung eines Ortschaums, umfassend die Komponenten
| | |
|---|---|
| 50 bis 98 Gew.-% | ein oder mehrere anorganische Füllstoffe A), |
| 1 bis 48 Gew.-% | ein oder mehrere kationische oder amphotere Polymere B) |
| 0,5 bis 48 Gew.-% | ein oder mehrere Tenside C) |
| 0,01 bis 5 Gew.-% | ein oder mehrere mit den Polymeren B) reaktionsfähige Vernetzer D) |
| 0,5 bis 10 Gew.-% | ein oder mehrere Zellregulatoren E), ausgewählt aus Silikonen, Silikonaten und Kohlenstoff, |
| 0 bis 20 Gew.-% | ein oder mehrere Additive F), |
wobei sich die Gewichtsprozente von den Komponenten A) bis F) auf die nichtwässrigen Anteile beziehen und die Summe aus A) bis F) 100 Gew.-% ergibt.

2. System nach Anspruch 1, **dadurch gekennzeichnet, dass** es als Zellregulator E) ein Alkalialkylsilikonat enthält.

3. System nach Anspruch 1 oder 2, **dadurch gekennzeichnet, dass** das Polymer B) eine Löslichkeit in Wasser von mindestens 5 Gew.-% unter Normalbedingungen (20°C, 101,3 kPa) bei pH 7 aufweist.

4. System nach einem der Ansprüche 1 bis 3, **dadurch gekennzeichnet, dass** es als kationisches Polymer B) ein Polyvinylamin oder ein Poly(vinylamin-vinylformamid)-Copolymer enthält.

5. System nach einem der Ansprüche 1 bis 4, **dadurch gekennzeichnet, dass** es als amphoteres Polymer B) ein Terpolymer aus den Einheiten Vinylamin, Vinylformamid und Natriumacrylat enthält.

6. System nach einem der Ansprüche 1 bis 5, **dadurch gekennzeichnet, dass** als anorganische Füllstoffe A) mit Amino-, Carboxyl- und/oder Hydroxylgruppen oberflächenmodifiziertes Calciumsulfat, mit Amino-, Carboxyl- und/oder Hydroxylgruppen oberflächenmodifizierte Aluminiumsilikate oder Mischungen davon eingesetzt werden.

7. System nach einem der Ansprüche 1 bis 6, **dadurch gekennzeichnet, dass** es als Tensid C) mindestens ein Tensid auf Basis natürlicher Eiweisrohstoffe enthält.

8. System nach einem der Ansprüche 1 bis 7, **dadurch gekennzeichnet, dass** es als Vernetzer D) ein Dialdehyd enthält.

9. System nach einem der Ansprüche 1 bis 8, **dadurch gekennzeichnet, dass** die Komponenten B) - D) in Form wässriger Lösungen vorliegen.

10. Verfahren zur Herstellung eines Ortschaums unter Verwendung der Komponenten A) bis F) des Systems gemäß einem der Ansprüche 1 bis 9 und Aufschäumen mit einem Gas oder einer Gasmischung.

11. Verfahren nach Anspruch 10 umfassend die Stufen
(a) Eintragen eines Gases oder einer Gasmischung in eine wässrige Lösung oder Suspension, die mindestens die Komponente C) enthält,
(b) Aufschäumen der wässrigen Lösung oder Suspension über ein oder mehrere Mischelemente
(c) Zugabe der Komponenten A), B), D), E) und F) zusammen oder getrennt vor oder nach Stufe (b) über ein oder mehrere Mischelemente,
(d) Trocknung auf einen Wassergehalt unter 5 Gew-%.

12. Verfahren nach Anspruch 11, **dadurch gekennzeichnet, dass** in Stufe (a) Druckluft mit einem Druck im Bereich von 100 bis 2000 kPa eingetragen wird.

13. Verfahren nach Anspruch 11 oder 12, **dadurch gekennzeichnet, dass** die wässrige Lösung oder Suspension im letzten Mischelement einen Feststoffgehalt im Bereich von 5 bis 50 Gew.-% aufweist.

14. Ortschaum, erhältlich nach dem Verfahren gemäß einem der Ansprüche 10 bis 13.

15. Ortschaum nach Anspruch 14, **dadurch gekennzeichnet, dass** er eine Dichte im Bereich von 10 bis 50 kg/m³ aufweist.

16. Ortsschaum nach Anspruch 14 oder 15, **dadurch gekennzeichnet, dass** er einen Brennwert kleiner als 3,0 MJ/kg, bestimmt nach DIN 51900 Teil 3, aufweist.

17. Verwendung des Ortschaums nach einem der Ansprüche 14 bis 16 zur Wärmedämmung.

18. Verwendung des Ortschaums nach einem der Ansprüche 14 bis 16 zum Ausfüllen von Hohlräumen und Hohlkörpern.

19. Verwendung des Ortschaums nach einem der Ansprüche 14 bis 16 als Brandriegel oder Teil eines Brandriegels.

## Claims

1. A system for producing an in-situ foam, said system comprising the components
one or more inorganic fillers A) at from 50 to 98 wt%,
one or more cationic or amphoteric polymers B) at from 1 to 48 wt%,
one or more surfactants C) at from 0.5 to 48 wt%,
one or more crosslinkers D) capable of reacting with said polymers B) at from 0.01 to 5 wt%,
one or more cell regulators E), selected from silicones, siliconates and carbon, at from 0.5 to 10 wt%,
one or more additives F) at from 0 to 20 wt%,
wherein the weight percentages of said components A) to F) are based on the nonaqueous fractions and the sum total of A) to F) adds up to 100 wt%.

2. The system according to claim 1 comprising an alkali metal alkylsiliconate as cell regulator E).

3. The system according to claim 1 or 2 wherein polymer B) has a solubility in water of at least 5 wt% under standard conditions (20°C, 101.3 kPa) at pH 7.

4. The system according to any of claims 1 to 3 comprising a polyvinylamine or a poly(vinylamine-vinylformamide) copolymer as cationic polymer B).

5. The system according to any of claims 1 to 4 comprising a terpolymer comprising vinylamine, vinylformamide and sodium acrylate units as amphoteric polymer B).

6. The system according to any of claims 1 to 5 comprising calcium sulfate surface modified with amino, carboxyl and/or hydroxyl groups, aluminum silicates surface modified with amino, carboxyl and/or hydroxyl groups, or mixtures thereof as inorganic fillers A).

7. The system according to any of claims 1 to 6 comprising by way of surfactant C) at least one surfactant based on natural proteinaceous raw materials.

8. The system according to any of claims 1 to 7 comprising a dialdehyde as crosslinker D).

9. The system according to any of claims 1 to 8 wherein components B)-D) are present in the form of aqueous solutions.

10. A process for producing an in-situ foam by using the components A) to F) of the system according to any of claims 1 to 9 and foaming with a gas or gas mixture.

11. The process according to claim 10 comprising the steps of
(a) introducing a gas or gas mixture into an aqueous solution or suspension comprising at least said component C),
(b) foaming the aqueous solution or suspension via one or more mixing elements
(c) addition of components A), B), D), E) and F) together or separately before or after step (b) via one or more mixing elements,
(d) drying to a water content below 5 wt%.

12. The process according to claim 11 wherein compressed air having a pressure in the range from 100 to 2000 kPa is introduced in step (a).

13. The process according to claim 11 or 12 wherein the aqueous solution or suspension in the last mixing element has a solids content in the range from 5 to 50 wt%.

14. An in-situ foam obtainable by the process according to any of claims 10 to 13.

15. The in-situ foam according to claim 14 having a density in the range from 10 to 50 kg/m³.

16. The in-situ foam according to claim 14 or 15 having a heat of combustion below 3.0 MJ/kg, determined according to DIN 51900 part 3.

17. The method of using the in-situ foam according to any of claims 14 to 16 for thermal insulation.

18. The method of using the in-situ foam according to any of claims 14 to 16 for filling cavities and hollow bodies.

19. The method of using the in-situ foam according to any of claims 14 to 16 as a fire barrier or as part of a fire barrier.

## Revendications

1. Système pour la fabrication d'une mousse in situ, comprenant les composants suivants :
50 à 98 % en poids d'une ou de plusieurs charges inorganiques A),
1 à 48 % en poids d'un ou de plusieurs polymères cationiques ou amphotères B),
0,5 à 48 % en poids d'un ou de plusieurs tensioactifs C),
0,01 à 5 % en poids d'un ou de plusieurs agents de réticulation D) aptes à réagir avec les polymères B),
0,5 à 10 % en poids d'un ou de plusieurs régulateurs cellulaires E), choisis parmi les silicones, les siliconates et le carbone,
0 à 20 % en poids d'un ou de plusieurs additifs F),
les pourcentages en poids des composants A) à F) se rapportant à des fractions non aqueuses et la somme de A) à F) étant égale à 100 % en poids.

2. Système selon la revendication 1, **caractérisé en ce qu'**il contient un siliconate d'alkyle alcalin en tant que régulateur cellulaire E).

3. Système selon la revendication 1 ou 2, **caractérisé en ce que** le polymère B) présente une solubilité dans l'eau d'au moins 5 % en poids en conditions normales (20 °C, 101,3 kPa) à pH 7.

4. Système selon l'une quelconque des revendications 1 à 3, **caractérisé en ce qu'**il contient une polyvinylamine ou un copolymère de poly(vinylamine-vinylformamide) en tant que polymère cationique B).

5. Système selon l'une quelconque des revendications 1 à 4, **caractérisé en ce qu'**il contient un terpolymère des unités vinylamine, vinylformamide et acrylate de sodium en tant que polymère amphotère B).

6. Système selon l'une quelconque des revendications 1 à 5, **caractérisé en ce que** du sulfate de calcium modifié en surface avec des groupes amino, carboxyle et/ou hydroxyle, des silicates d'aluminium modifiés en surface avec des groupes amino, carboxyle et/ou hydroxyle ou des mélanges de ceux-ci sont utilisés en tant que charges inorganiques A).

7. Système selon l'une quelconque des revendications 1 à 6, **caractérisé en ce qu'**il contient au moins un tensioactif à base de matières premières protéiques naturelles en tant que tensioactif C).

8. Système selon l'une quelconque des revendications 1 à 7, **caractérisé en ce qu'**il contient un dialdéhyde en tant qu'agent de réticulation D).

9. Système selon l'une quelconque des revendications 1 à 8, **caractérisé en ce que** les composants B) à D) se présentent sous la forme de solutions aqueuses.

10. Procédé de fabrication d'une mousse in situ utilisant les composants A) à F) du système selon l'une quelconque des revendications 1 à 9 et un moussage avec un gaz ou un mélange gazeux.

11. Procédé selon la revendication 10, comprenant les étapes suivantes :
(a) l'introduction d'un gaz ou d'un mélange gazeux dans une solution ou suspension aqueuse, qui contient au moins le composant C),
(b) le moussage de la solution ou suspension aqueuse par un ou plusieurs éléments de mélange,
(c) l'ajout des composants A), B), D), E) et F) ensemble ou séparément avant ou après l'étape (b) par un ou plusieurs éléments de mélange,
(d) le séchage à une teneur en eau inférieure à 5 % en poids.

12. Procédé selon la revendication 11, **caractérisé en ce qu'**à l'étape (a), de l'air comprimé est introduit avec une pression dans la plage allant de 100 à 2 000 kPa.

13. Procédé selon la revendication 11 ou 12, **caractérisé en ce que** la solution ou suspension aqueuse présente dans le dernier élément de mélange une teneur en solides dans la plage allant de 5 à 50 % en poids.

14. Mousse in situ, pouvant être obtenue par le procédé selon l'une quelconque des revendications 10 à 13.

15. Mousse in situ selon la revendication 14, **caractérisée en ce qu'**elle présente une densité dans la plage allant de 10 à 50 kg/m³.

16. Mousse in situ selon la revendication 14 ou 15, **caractérisée en ce qu'**elle présente une valeur de combustion inférieure à 3,0 MJ/kg, déterminée selon DIN 51900 partie 3.

17. Utilisation de la mousse in situ selon l'une quelconque des revendications 14 à 16 pour l'isolation thermique.

18. Utilisation de la mousse in situ selon l'une quelconque des revendications 14 à 16 pour le remplissage de cavités et de corps creux.

19. Utilisation de la mousse in situ selon l'une quelconque des revendications 14 à 16 en tant que pare-feu ou partie d'un pare-feu.
